# EUROPÄISCHE PATENTSCHRIFT

(11) **EP 0 836 958 B1**
(45) Veröffentlichungstag und Bekanntmachung des Hinweises auf die Patenterteilung: **24.04.2002**
(21) Anmeldenummer: 97116223.5
(22) Anmeldetag: 18.09.1997
(51) Int. Cl.: B60J 7/043

(54) **Schiebehebedach für ein Fahrzeug**
Sliding roof for vehicle
Toit coulissant pour véhicule

(30) Priorität: 21.10.1996 DE 19643323
(43) Veröffentlichungstag der Anmeldung: 22.04.1998
(73) Patentinhaber: Bayerische Motoren Werke Aktiengesellschaft, 80788 München (DE)
(72) Erfinder: Clausen-Schaumann, Andreas, 82347 Bernried (DE); Minatti, Hans, 80935 München (DE)

(56) Entgegenhaltungen:
- EP-A- 0 306 647
- DE-A- 4 008 145

## Beschreibung

Die Erfindung betrifft ein Schiebehebedach für ein Fahrzeug, mit den im Oberbegriff des Patentanspruches 1 angegebenen Merkmalen.

Ein derartiges Schiebehebedach ist in der DE-A-40 08 145 an einer Fahrzeug-Dachöffnung vorgesehen, die von zwei Deckelteilen verschließbar ist. Das vordere Deckelteil kann mit seiner Hinterkante in eine Lüfterstellung ausgestellt werden, in der das vordere Deckelteil über das hintere Deckelteil nach hinten oder das hintere Deckelteil unter das vordere Deckelteil nach vorne verstellbar sind. Die große Dachöffnung kann im vorderen und hinteren Bereich lediglich jeweils weniger als zur Hälfte geöffnet werden. In der ausgestellten Lage des vorderen Deckels ist ein Beoder Entlüftungsspalt zwischen den Deckelteilen etwa im mittleren Längsbereich der Dachöffnung gebildet.

In der EP-A-0 306 647 ist ein Schiebedach eines Fahrzeugs mit zwei Deckelteilen beschrieben, von denen das vordere Deckelteil in Fahrzeuglängsrichtung größer bemessen ist als das hintere Deckelteil. Das hintere Deckelteil kann an der Vorderkante oder insgesamt in eine Tieflage abgesenkt werden, in der das vordere Deckelteil über das hintere Deckelteil nach hinten verschiebbar ist. In jeder Lage befinden sich die beiden Deckelteile innerhalb der Dachöffnung, wodurch diese entsprechend eingeschränkt ist und weniger als zur Hälfte geöffnet werden kann.

Aufgabe der Erfindung ist es, ein Schiebehebedach mit den Merkmalen im Oberbegriff des Patentanspruches 1 anzugeben, mit dem durch einfache Bewegungen der Deckelteile eine größere Fläche der Dachöffnung geöffnet werden kann.

Diese Aufgabe ist durch die Merkmale des Patentanspruches 1 gelöst. Vorteilhafte Ausgestaltungen der Erfindung sind den Unteransprüchen entnehmbar.

Nachdem das vordere Deckelteil eine gegenüber dem hinteren Deckelteil größere Längserstreckung aufweist und in der Öffnungsposition über das hintere Deckelteil nach hinten hinausragt, kann die Dachöffnung im vorderen Bereich mehr als zur Hälfte geöffnet werden, wodurch der vordere und hintere Bereich des Fahrgastraumes besser durchlüftet wird und insbesondere bei Sonnenschein lichtdurchflutet ist. Durch die spoilerartige Rückverlagerung des vorderen Deckelteiles über das hintere Deckelteil ist die Luftströmung im Dachbereich günstiger, unabhängig davon, in welchem Umfang die Dachöffnung geöffnet ist. Eine besonders weitgehende Rückverlagerung und flache Anordnung des vorderen Deckels ist bei abgesenkter Vorderkante des hinteren Deckelteiles möglich. Das vordere Deckelteil kann in Fahrzeuglängsrichtung um das vier- bis sechsfache größer bemessen sein als das hintere, beispielsweise lamellenförmig ausgebildete Deckelteil. Beide Deckelteile sind bevorzugt lichtdurchlässig und beispielsweise aus Glas gefertigt. Das vordere Deckelteil kann eine Fläche mit einem Längen-/Breitenverhältnis von ca. 800 mm x 840 mm und das hintere Deckelteil eine Fläche von 145 mm x 840 mm aufweisen. Beide Deckelteile werden bevorzugt von einem einzigen Elektromotor über jeweils zugeordnete Kupplungen angetrieben.

Die Höhe des Be- bzw. Entlüftungsspaltes zwischen abgesenkter Vorderkante des hinteren Deckelteiles (Glaslamelle) und der in Lüfterstellung ausgestellten Hinterkante des vorderen Deckelteiles (Großglasdeckel) kann vom vorderen Deckelteil in einem größeren Umfang als vom hintern Deckelteil erzeugt sein. Beispielsweise ist die Höhe des Be- bzw. Entlüftungsspaltes ca. 2/3 vom vorderen ausgestellten Deckelteil und mit ca. einem 1/3-Anteil vom hinteren Deckelteil gebildet. Ein Bebzw. Entlüftungsspalt im Dachbereich kann auch lediglich durch Absenken des hinteren Deckelteiles gebildet sein. In bevorzugter Weise erfolgt das Anheben der Hinterkante des vorderen Deckels und das Absenken der Vorderkante des hinteren Deckels gleichzeitig. Diese Bewegungen können von einem einzigen elektrischen Antrieb (Elektromotor) bewirkt werden. Unterhalb der Dachöffnung kann ein Rollo vorgesehen sein, das eine Sonnenblende bildet oder trägt und bei ausgestelltem vorderen Deckelteil aufgerollt beispielsweise einen Lüftungsspalt von ca. 50 bis 100 mm frei gibt. Beim Öffnen des vorderen Deckelteiles (Glasdeckel) aus der Lüfterstellung in die Öffnungsstellung wird bevorzugt zunächst das Rollo vollständig aufgerollt, so dass die damit bewegte Sonnenblende vollständig geöffnet ist. Anschließend kann sich das vordere Deckelteil nach hinten bewegen, das sich nach dem Verlassen der Lüfterstellung beispielsweise über ein Mechanikelement auf dem hinteren Deckelteil in der hinteren Öffnungsstellung ablegen kann. Dabei ist eine große Abstützlänge für das vordere Deckelteil möglich, das spoilerartig über das hintere Deckelteil hinaus ragt und eine große Öffnungsfläche der Dachöffnung bei gleichzeitig sehr flacher Stellung des vorderen geöffneten Deckelteiles ermöglicht.

Das Schiebehebedach kann auch bei kurzen Fahrzeugdächern verwendet werden und ermöglicht eine große Dachöffnung bzw. Glasfläche im Fahrzeugdach. In der Öffnungsstellung kann eine große Fläche der Dachöffnung geöffnet sein, wobei die Bewegungen der Deckelteile einfach auszuführen sind. Mit dem Schiebehebedach ist die Fahrzeugakustik verbessert, da in der Lüfterstellung und in der Öffnungsstellung des vorderen Deckelteiles eine flache Anordnung insbesondere des vorderen Deckelteiles gegenüber der Dachkontur vorliegt. Eine Abstützung des vorderen Deckeiteiles am hinteren lamellenförmigen Deckelteil verursacht keine Scheuerstellen an diesem Teil, insbesondere wenn das hintere Deckelteil aus einem Material mit einer harten Oberfläche, beispielsweise aus Glas besteht.

Ein Ausführungsbeispiel der Erfindung wird an Hand einer Zeichnung näher erläutert. Es zeigen
- Fig. 1: eine Draufsicht auf ein Ausführungsbeispiel eines Schiebehebedachs in seiner Schließstellung;
- Fig. 2: eine Draufsicht auf das Ausführungsbeispiel der Fig. 1 in seiner Öffnungsstellung;
- Fig. 3: in Seitenansicht das Ausführungsbeispiel in Schließstellung in einem vertikalen Längsschnitt;
- Fig. 4: eine Darstellung gemäß Fig. 3 in Lüfterstellung; und
- Fig. 5: eine den Figuren 3. und 4 entsprechende Darstellung in Öffnungsstellung.

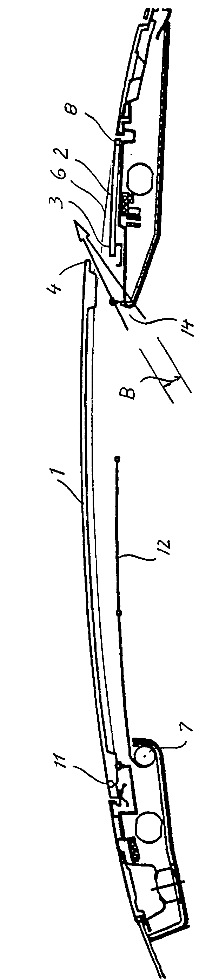

Das in den Figuren dargestellte Ausführungsbeispiel eines Schiebehebedachs besitzt zwei Deckelteile 1 und 2. In der in den Fig. 1 und 3 dargestellten Schließstellung befinden sich die beiden Deckelteile 1 und 2 hintereinander und im wesentlichen bündig mit der Kontur eines Fahrzeugdaches 6. Das vordere Deckteil ist in Fahrzeuglängsrichtung gesehen wesentlich (z.B. fünf- bis sechs-fach) größer bemessen als das hintere Deckelteil 2. Beide Deckelteile bestehen bevorzugt aus Glas.

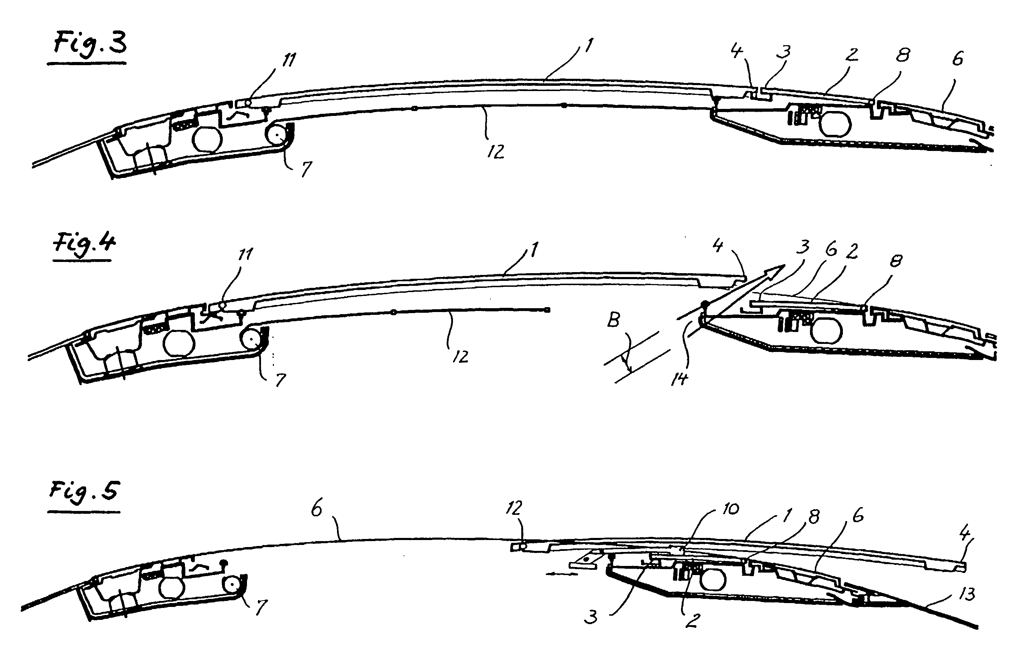

Um die Deckelteile in die Lüfterstellung zu bewegen, wird eine Hinterkante 4 des vorderen Deckelteils 1 um eine im Bereich der Vorderkante des Deckels liegende Achse 11 angehoben. Gleichzeitig wird die Vorderkante 3 des hinteren Deckelteils 2 abgesenkt. Die Lüfterstellung ist in der Seitenansicht der Fig. 4 gezeigt. Die Breite B des Spaltes der Lüfterstellung zwischen den beiden Kanten 3 und 4 wird dabei zum größten Teil (insbesondere 2/3) durch das Anheben der Hinterkante 4 des vorderen Deckelteils 1 und zum restlichen (insbesondere 1/3) Teil durch das Absenken der Vorderkante des hinteren Deckelteils 2 gebildet. Die Absenkung der Vorderkante des hinteren Deckelteils 2 erfolgt um eine Schwenkachse 8. Die Schwenkachse 8 ist ortsfest am Fahrzeugdach 6 vorgesehen, d.h. das hintere lamellenförmige Deckelteil ist am Fahrzeugdach 6 nur schwenkbar gelagert. Für die gleichzeitige Bewegung der Hinterkante 4 und der Vorderkante 3 der Deckelteile genügt ein einziger Elektromotor, welcher über zugeordnete Kupplungen und Antriebsritzel den Antrieb für die Deckelbewegungen erzeugt. Der Antrieb kann dabei in bekannter Weise über Antriebskabel, welche mit den Deckelteilen in bekannter Weise zugeordneten und in dachfesten Schienen geführten Schlitten verbunden sind, übertragen werden. Die Mechanik für die Bewegungen der beiden Deckelteile 1 und 2 kann in der Weise ausgebildet sein, wie es beispielsweise aus der DE 40 08 145 C2 bekannt ist, wobei das lamellenförmige hintere Deckelteil nur um eine am Fahrzeugdach 6 ortsfeste Achse 8 schwenkbar ist.

Ferner wird mit einem Rolloantrieb 7 von einer Sonnenblende 12 ein Lüftungsspalt 14 von ca. 50 mm bis 100 mm freigegeben.

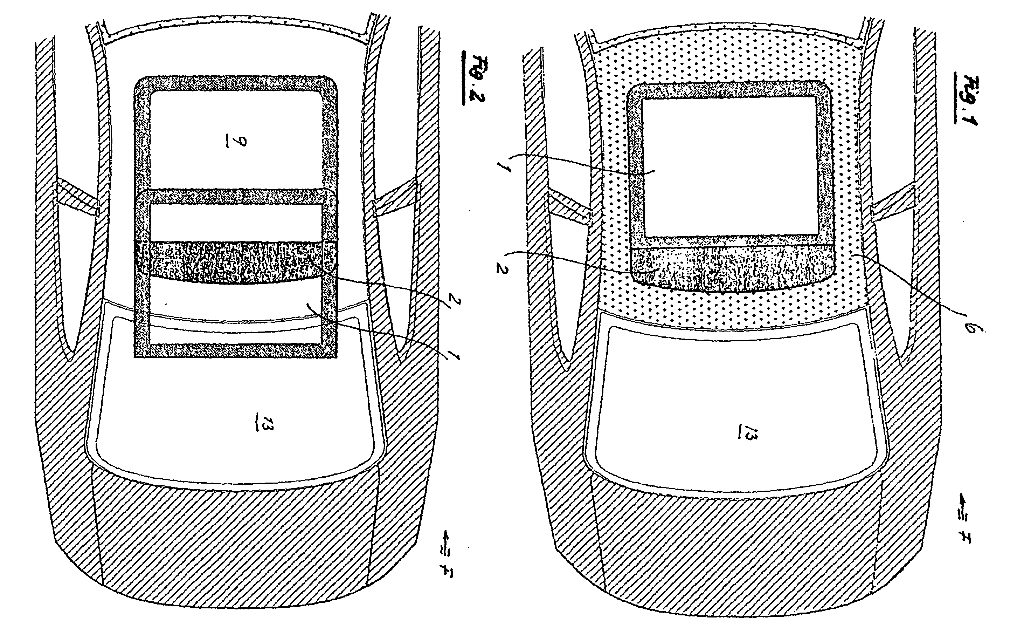

Wenn das vordere Deckelteil 1 in Richtung zu seiner hintersten Endposition, welche in den Fig. 2 und 5 dargestellt ist, durch Längsverschiebung bewegt wird, erfolgt vorauseilend die vollständige Öffnung der Sonnenblende 12 mit Hilfe des separaten Rolloantriebs 7. Der Rolloantrieb 7 kann ebenfalls von einem Elektromotor gebildet werden. Wie aus den Figuren 2 und 5 zu ersehen ist, erreicht man in der hintersten Endstellung (Öffnungsstellung) des vorderen Deckelteils 1 eine große effektive Öffnung 9. Der hintere Teil (Hinterkante 4) des vorderen Deckelteils 1 ragt spoilerartig über den rückwärtigen Teil des Fahrzeugdaches 6 und auch teilweise über die Heckscheibe 13. In bevorzugter Weise kann dabei das vordere Deckelteil 1 über ein in Längsrichtung begrenzt verlagerbares und kippbares Mechanikteil 10 auf dem nach unten geschwenkten lamellenförmigen hinteren Deckelteil 2 aufliegen, wodurch eine zusätzliche Abstützfläche und relativ große Abstützlänge erreicht werden. Diese Abstützlänge wird zwischen einem nicht näher dargestellten am Dach geführten Schlitten, an welchem sich die vordere Schwenkachse 11 des Deckelteils 1 befindet (wie z.B. die DE 40 08 145 C2 zeigt) und dem auf dem Deckelteil 2 aufsitzenden Mechanikteil 10 gebildet. Da auf das hintere Deckelteil 2 auch bevorzugt aus Glas besteht, werden Scheuerstellen vermieden. Gegebenenfalls kann zumindest die Unterseite des Mechanikteils 10 aus Kunststoff oder Silikonkautschuk bestehen.

Das Mechanikteil 10 kann auch weiter hinten, beispielsweise im Bereich des hinteren Randes der Dachöffnung 9, abgestützt sein. Es ist auch möglich, das hintere Ende des hinteren Deckelteils 2 absenkbar auszubilden und das vordere Deckelteil 1 im Bereich des hinteren Randes der Dachöffnung 9 zusätzlich abzustützen. Man gewinnt dann eine sehr flache Anordnung des vorderen Deckelteils 1 in der in den Figuren 2 und 5 dargestellten Öffnungsstellung.

Gegebenenfalls können die Randbereiche des vorderen Deckelteils 1 und das lamellenförmige hintere Deckelteil 2 mit Solarzellen belegt sein. Diese liefern zumindest teilweise die für die Stellbewegungen der Deckelteile benötigte Energie. In bevorzugter Weise wird diese Energie in der Fahrzeugbatterie zwischengespeichert.

## Patentansprüche

1. Schiebehebedach für ein Fahrzeug mit einem zweiteiligen Deckel, insbesondere aus Glas, dessen Deckelteile (1, 2) in einer eine Dachöffnung (9) verschließenden Schließstellung hintereinander und etwa bündig mit einer Dachkontur angeordnet sind, wobei ein vorderes Deckelteil (1) mit seiner Hinterkante (4) in eine Lüfterstellung ausstellbar und längsverschiebbar ist und ein hinteres Deckelteil (2) mit seiner Vorderkante (3) absenkbar ist, **dadurch gekennzeichnet, dass** das vordere Deckelteil (1) in Fahrzeuglängsrichtung größer bemessen ist als das hintere Deckelteil (2), und das vordere Deckelteil (1) in seiner Öffnungsposition über das hintere Deckelteil (2) nach hinten hinausragt.

2. Schiebehebedach nach Anspruch 1, **dadurch gekennzeichnet, daß** das vordere Deckelteil (1) um mindestens etwa das Vierfache größer bemessen ist als das hintere Deckelteil (2).

3. Schiebehebedach nach Anspruch 1 oder 2, **dadurch gekennzeichnet, dass** die Breite des Be- bzw. Entlüftungsspaltes zwischen abgesenkter Vorderkante (3) des hinteren Deckelteiles (2) und der in Lüfterstellung ausgestellten Hinterkante (4) des vorderen Deckelteiles (1) vom vorderen Deckelteil (1) in einem größeren Anteil als vom hinteren Deckelteil (2) gebildet ist.

4. Schiebehebedach nach Anspruch 3, **dadurch gekennzeichnet, dass** der Bebzw. Entlüftungsspalt zu etwa 2/3 seiner Höhe vom vorderen Deckelteil (1) und zu etwa 1/3 seiner Höhe vom hinteren Deckelteil (2) gebildet ist.

5. Schiebehebedach nach einem der Ansprüche 1 bis 4, **dadurch gekennzeichnet, daß** das vordere Deckelteil (1) in einer zumindest teillweise nach hinten verschobenen Öffnungsposition am darunterliegenden hinteren Deckelteil (2) und/oder im Bereich des hinteren Randes der Dachöffnung (9) zusätzlich abgestützt ist.

6. Schiebehebedach nach Anspruch 5, **dadurch gekennzeichnet, daß** das hintere Deckelteil (2) ferner an seinem hinteren Ende absenkbar ist.

7. Schiebehebedach nach einem der Ansprüche 1 bis 6, **dadurch gekennzeichnet, dass** das hintere Deckelteil (2) zum Absenken seiner Vorderkante (3) schwenkbar in einer Schwenkachse (8) am Fahrzeugdach (6) gelagert ist.

8. Schiebehebedach nach Anspruch 7, **dadurch gekennzeichnet, dass** die Schwenkachse (8) ortsfest am Fahrzeugdach (6) vorgesehen ist.

9. Schiebehebedach nach einem der Ansprüche 1 bis 8, **dadurch gekennzeichnet, dass** das Anheben der Hinterkante (4) des vorderen Deckelteils (1) und das Absenken der Vorderkante (3) des hinteren Deckelteils (2) gleichzeitig erfolgt.

10. Schiebehebedach nach einem der Ansprüche 1 bis 9, **dadurch gekennzeichnet, dass** für die Bewegungen des vorderen und hinteren Deckelteils (1, 2) ein einziger Elektromotor vorgesehen ist.

11. Schiebehebedach nach einem der Ansprüche 1 bis 10, **dadurch gekennzeichnet, dass** ein bevorzugt elektrisch betriebenes Rollo (7) bei in Lüfterstellung angehobenem vorderen Deckelteil (1) und/oder abgesenktem hinteren Deckelteil (2) mindestens einen Lüftungsspalt (14) von 50 mm frei gibt.

12. Schiebehebedach nach Anspruch 11, **dadurch gekennzeichnet, dass** das Rollo (7) von einem separaten zugeordneten Elektromotor angetrieben ist.

13. Schiebehebedach nach Anspruch 11 oder 12, **dadurch gekennzeichnet, dass** bei der Bewegung des vorderen und/oder hinteren Deckelteils (1, 2) in die Lüfterstellung die vom Rolloantrieb (7) gesteuerte Sonnenblende (12) voreilend in die den Lüftungsspalt (14) von mindestens 50 mm frei gebenden Stellung bewegbar ist.

## Claims

1. A sliding and lifting roof for a vehicle comprising a two-part cover, especially of glass, the parts (1, 2) of the cover, when in a closed position for closing a roof opening (9), being disposed one behind the other and approximately flush with a roof contour, wherein the rear edge (4) of a first cover part (1) is longitudinally movable and extendible into a ventilator position and the front edge (3) of a rear cover part (2) can be lowered, **characterised in that** the front cover part (1) in the longitudinal direction of the vehicle is made greater than the rear cover part (2), and the front cover part (1) when in the open position projects backwards beyond the rear cover part (2).

2. A sliding and lifting roof according to claim 1, **characterised in that** the front cover part (1) is made at least about four times as great as the rear cover part (2).

3. A sliding and lifting roof according to claim 1 or claim 2, **characterised in that** the width of the aeration and/or ventilation gap between the lowered front edge (3) of the rear cover part (2) and the rear edge (4), when extended into the ventilator position, of the front cover part (1) is made up by the front cover part (1) to a greater extent than by the rear cover part (2).

4. A sliding and lifting roof according to claim 3, **characterised in that** about two-thirds of the ventilation gap is made up by the front cover part (1) and about one-third by the rear cover part (2).

5. A sliding and lifting roof according to any of claims 1 to 4, **characterised in that** the front cover part (1), when in an at least partly backwardly moved open position, is additionally supported on the rear cover part (2) underneath it and/or in the region of the rear edge of the roof opening (9).

6. A sliding and lifting roof according to claim 5, **characterised in that** the rear cover part (2) can also be lowered at its rear end.

7. A sliding and lifting roof according to any of claims 1 to 6, **characterised in that** the rear cover part (2), in order to lower its front edge (3), is pivotably mounted in a pivot (8) on the vehicle roof (6).

8. A sliding and lifting roof according to claim 7, **characterised in that** the pivot (8) is non-displaceably provided on the vehicle roof (6).

9. A sliding and lifting roof according to any of claims 1 to 8, **characterised in that** the rear edge (4) of the front cover part (1) is raised and simultaneously the front edge (3) of the rear cover part (2) is lowered.

10. A sliding and lifting roof according to any of claims 1 to 9, **characterised in that** a single electric motor is provided for moving the front and the rear cover part (1, 2).

11. A sliding and lifting roof according to any of claims 1 to 10, **characterised in that** a preferably electrically operated window shade (7) uncovers a ventilation gap (14) of at least 50 mm when the front cover part (1) is raised in the ventilator position and/or the rear cover part (2) is lowered.

12. A sliding and lifting roof according to claim 11, **characterised in that** the window shade (7) is driven by a separate electric motor.

13. A sliding and lifting roof according to claim 11 or claim 12, **characterised in that** during the movement of the front and/or rear cover part (1, 2) into the ventilator position, the sun visor (12) controlled by the window-shade drive (7) is movable in advance into the position uncovering the ventilation gap (14) over at least 50 mm.

## Revendications

1. Toit coulissant de véhicule composé d'un panneau en deux parties, notamment en verre, dont les parties (1, 2) sont placées l'une derrière l'autre en position de fermeture, dans l'ouverture (9) du toit et rejoignent sensiblement à niveau le contour du toit,
une partie avant (1) pouvant être sortie en position de ventilation avec son arête arrière (4) et pouvant coulisser longitudinalement, et une partie arrière (2) dont l'arête avant (3) peut être abaissée,
**caractérisé en ce que**
la partie avant (1) du panneau est plus grande dans la direction longitudinale du véhicule que la partie arrière (2) du panneau et, en position d'ouverture, la partie avant (1) déborde vers l'arrière au-dessus de la partie arrière (2) du panneau.

2. Toit coulissant selon la revendication 1,
**caractérisé en ce que**
la partie avant (1) du panneau est au moins quatre fois plus grande que la partie arrière (2) du panneau.

3. Toit coulissant selon l'une des revendications 1 ou 2,
**caractérisé en ce que**
la largeur de l'intervalle de ventilation ou d'aération entre l'arête avant (3), abaissée de la partie arrière (2) du panneau et l'arête arrière (4) de la partie avant (1) du panneau, sortie en position de ventilation, est formée en plus grande proportion par la partie avant (1) que par la partie arrière (2) du panneau.

4. Toit coulissant selon la revendication 3,
**caractérisé en ce que**
l'intervalle de ventilation ou d'aération est formé sur environ 2/3 de sa hauteur par la partie avant (1) et sur environ 1/3 de sa hauteur par la partie arrière (2).

5. Toit coulissant selon l'une des revendications 1 à 4,
**caractérisé en ce que**
dans au moins sa position d'ouverture, coulissée en partie vers l'arrière, la partie avant (1) du panneau s'appuie sur la partie arrière (2) qui se trouve en dessous et/ou en plus au niveau du bord arrière de l'ouverture (9) du toit.

6. Toit coulissant selon la revendication 5,
**caractérisé en ce que**
la partie arrière (2) peut en outre s'abaisser au niveau de son extrémité arrière.

7. Toit coulissant selon l'une des revendications 1 à 6,
**caractérisé en ce que**
la partie arrière (2) du panneau est montée pivotante autour d'un axe (8) dans le toit (6) du véhicule pour abaisser son arête avant (3).

8. Toit coulissant selon la revendication 7,
**caractérisé en ce que**
l'axe de basculement (8) est monté de manière fixe dans le toit (6) du véhicule.

9. Toit coulissant selon l'une des revendications 1 à 8,
**caractérisé en ce que**
le soulèvement de l'arête arrière (4) de la partie avant (1) du panneau et l'abaissement de l'arête avant (3) de la partie arrière du panneau (2) se font simultanément.

10. Toit coulissant selon l'une des revendications 1 à 9,
**caractérisé par**
un unique moteur électrique pour déplacer la partie avant et la partie arrière (1, 2) du panneau.

11. Toit coulissant selon l'une des revendications 1 à 10,
**caractérisé par**
un rouleau d'entraînement (7) notamment électrique qui, lorsque la partie avant (1) du panneau est soulevée et/ou lorsque la partie arrière (2) du panneau est abaissée, libère au moins un intervalle de ventilation (14) de 50 mm.

12. Toit coulissant selon la revendication 11,
**caractérisé en ce que**
l'entraînement à rouleau (7) est commandé par un moteur électrique distinct.

13. Toit coulissant selon la revendication 11 ou 12,
**caractérisé en ce que**
lors du mouvement de la partie avant et/ou de la partie arrière (1, 2) du panneau, en position de ventilation, l'écran solaire (12) commandé par l'entraînement à rouleau (7) est déplacé d'abord en position de libération de l'intervalle de ventilation (14) qui est d'au moins de 50 mm.
